Europäisches Patentamt

European Patent Office

Office européen des brevets

(11) Publication number: **0 332 122**
**A2**

## (12) EUROPEAN PATENT APPLICATION

(21) Application number: 89103938.0

(51) Int. Cl.⁴: **F21V 7/22**

(22) Date of filing: 06.03.89

(30) Priority: 08.03.88 IT 6718888

(43) Date of publication of application:
**13.09.89 Bulletin 89/37**

(84) Designated Contracting States:
**AT BE DE ES FR GB NL SE**

(71) Applicant: VALEO VISION S.p.A.
**Via Asti, 89**
**I-10026 Santena(IT)**

(72) Inventor: **Amerio, Giorgio**
**Strada della Magra 93**
**I-10156 Torino(IT)**

(74) Representative: **Boggio, Luigi et al**
**c/o Ingg. Carlo e Mario Torta Via Viotti, 9**
**I-10121 Torino(IT)**

(54) **A method for the production of a headlamp reflector made of a synthetic thermoplastic polymer, and a headlamp reflector made by such method.**

(57) A method for manufacturing a headlamp reflector made of a synthetic thermoplastic polymer, comprising a first phase for production of the reflector structure by moulding a synthetic thermoplastic polymer incorporating a percentage of conductive material such as to confer on it a volume resistivity less than $10^8$ ohm.cm., and a second phase of electrostatically painting the said moulded reflector.

Fig.3

EP 0 332 122 A2

# A METHOD FOR THE PRODUCTION OF A HEADLAMP REFLECTOR MADE OF A SYNTHETIC THERMOPLASTIC POLYMER, AND A HEADLAMP REFLECTOR MADE BY SUCH METHOD

The present invention relates to a method for the production of a headlamp reflector (in particular for land, air and sea vehicles of any type and dimensions) made of a synthetic thermoplastic polymer.

As is known, headlamp reflectors, particularly for vehicles, can be made in sheet metal or, alternatively, in thermosetting plastics materal, which is injection moulded into the shape required for the reflector, and which is subsequently painted for the purpose of imparting the necessary reflectance characteristics before the final aluminising under vacuum. The method of manufacturing such thermosetting reflectors, which are currently preferred to those of sheet metal, is however rather expensive both because of the rather high percentage of rejects which occur at the end of the moulding phase, connected with the characteristics of injection moulding of thermosetting materials, and also because of the burden of producing the associated installations for production of such thermosetting articles. However, reflectors of thermoplastic material, have also been made, but these suffer a degeneration in their photometric characteristics in relation to the heat caused by the lamp.

The principal object of the present invention is therefore that of providing a method for the production of a headlamp reflector made from a synthetic thermoplastic polymer which overcomes the above indicated disadvantage and which, therefore, will offer the characteristic advantages of production economy whilst at the same time being adapted to receive the application of a paint which has the necessary characteristics (extension and reflectance) for headlamp reflectors, in particular for motor vehicles, so as to guarantee the constancy of the required photometric performance.

The said object is achieved by the present invention in that it relates to a method for the manufacture of a headlamp reflector made of synthetic thermoplastic polymer, characterised by the fact that it comprises a first phase of producing the structure of the said reflector by moulding the said synthetic thermoplastic polymer including a percentage of conductive material such as to confer on it a volume resistivity less than $10^3$ ohm.cm, and a second phase of electrostatically painting the said moulded reflector.

For a better understanding of the present invention there is now given a non-limitative description of various embodiments, with reference to the attached drawings, in which:

Figure 1 is a front view of a headlamp reflector made according to the method of the present invention;

Figure 2 is a section taken on the line II-II, of the reflector of Figure 1;

Figure 3 is a block schematic diagram of an installation for one phase in the manufacture of the reflector of the present invention; and

Figure 4 is a block schematic diagram of a variant of the installation of Figure 3.

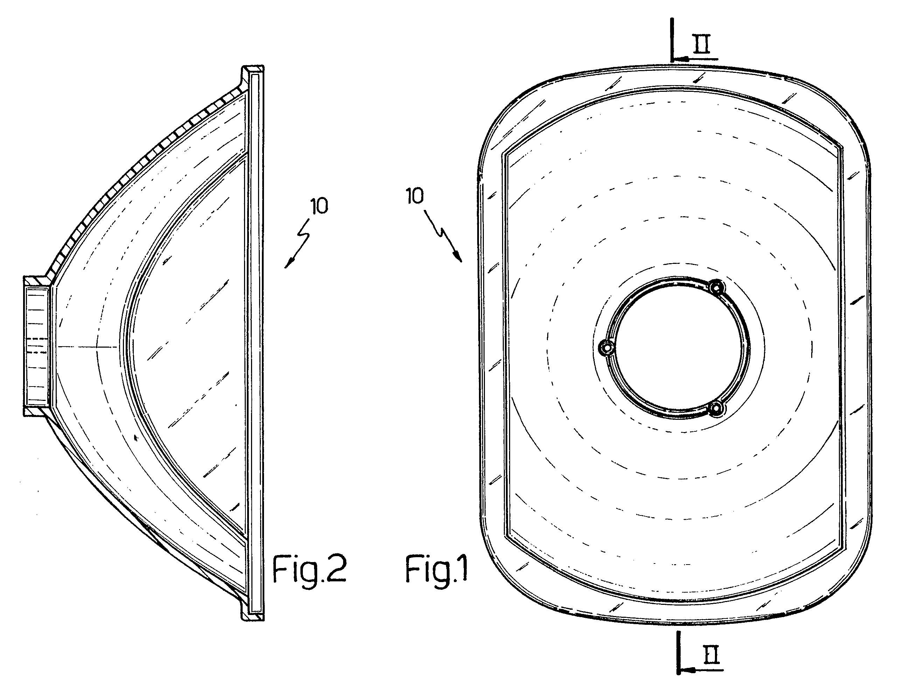

In performing the method of the present invention the starting material is constituted by polyphenylene sulphide having a percentage of a conductive material such as to confer on it a volume resistivity less than $10^3$ ohm.cm, and a headlamp reflector is formed by injection moulding to a conventional shape with parabolic portions one type of which is illustrated in Figures 1 and 2 and indicated with the reference numeral 10, such as are utilised for European motor vehicles. This base material is the subject of Italian Patent application entitled "Synthetic thermoplastic polymer based on polyphenylene sulphide" filed on the same date by the same applicant and the contents of which are incorporated here by reference as far as necessary; it is obtained from a stock mixture, comprising the basic polyphenylene sulphide having possible glass fibre and/or mineral fillers, mixed with the maximum percentage (25%) of the carbonaceous material (conveniently carbon black), by mixture with the polyphenylene sulphide itself in variable percentages according to the value of volume resistivity desired in the final material.

The final percentage by weight of conductive material can vary between 1% and 25% so as to confer on the final material a volume resistivity less than $10^8$ ohm.cm; for particular applications such as the subsequent electrostatic painting of headlamp reflectors an optimum value of the volume resistivity is about $10^4$ ohm.cm, which can be obtained with a percentage of carbon black equal to about 5%, which gives a good compromise between the requirements of electrostatic paintability and those of not excessively modifying the mechanical characteristics.

For the production of the reflector 10 by injection moulding there is conveniently utilised an injection moulding machine of the screw drive type for thermoplastic materials, with plasticising temperature control up to 400°C plus or minus 3°C, with parameters of injection speed, injection pressure, post pressure and counter pressure controlled in a closed loop by means of servo valves with process control which allows for the automatic correction of the metering rate to compensate for possible variations in material density during the plasticising phase, and with a closure unit of mechanical toggle type with means for monitoring the mould clamping force and twist of each column. The mould comprises a matrix block and die of AISI 420 steel for resistance to the abrasive effects of the glass fibres and mineral filler, with the parabolic die being mirror polished to a roughness of Ra = 0.04μm, with oil circulation mould thermostatting with uniform temperature control on the surfaces of the walls obtained by the positioning of the heating channels at a constant distance from the walls of the cavity: the high operating temperature of the mould requires the use of insulating plates of glass resin interposed between them and the planes of the press to avoid the transfer of heat carried by the central heating unit (plate with lambda = 0.23 w/k°m). The air vents are formed with 5 mm wide apertures of a depth from 0.01 to 0.02 mm along the closure lines of the mould; the injection point is of the submerged, or direct or fan type. The accessories comprise:

drying apparatus composed of a molecular sieve dehumidifier with dry air heating up to 170°C; insulating hopper in stainless steel of a capacity sufficient to hold granules at a temperature of about 150°C for six hours;

a diathermic oil mould conditioning control unit for the temperature regulation of the moulding parts at a temperature between 130 and 170°C.

For producing a reflector 10 for European motor vehicles, which is that illustrated in Figures 1 and 2, the following technological parameters of the moulding phase are defined:

| | |
|---|---|
| closure force | 250 ton |
| Cylinder temperature | 324-326°C |
| injection pressure | 1150 bar |
| hold pressure | 800 bar |
| higher pressure injection temperature | 1.8 sec |
| post pressure time | 10 sec |
| injection speed | medium |
| screw rotation speed | 50 RPM |
| mould temperature | 140°C |
| workpiece shaping time with mould closed | 27 seconds |
| total cycle time | 48 seconds |
| injection point | central with circular film (360°C) |
| moulded product weight | 174 g |

The reflector 10 obtained by moulding is then subjected to an electrostatic paint treatment which can be achieved thanks to the electrical conductivity characteristics of the material constituting the reflector itself.

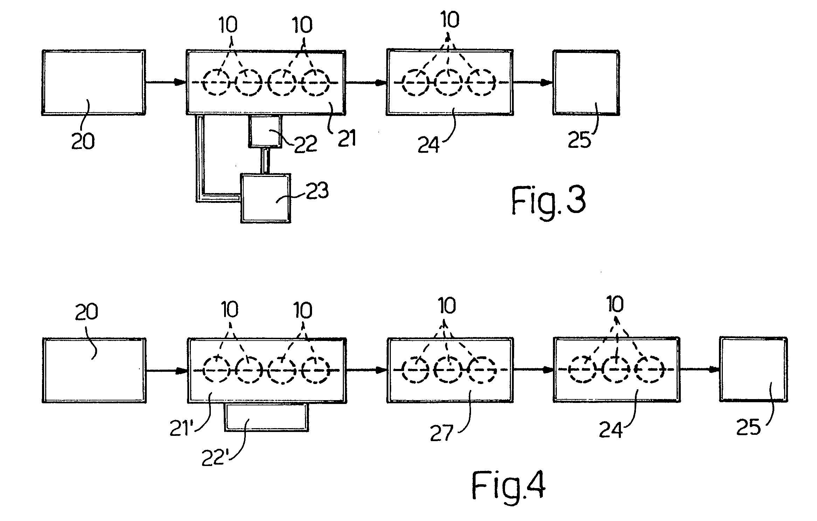

As can be seen from Figure 3, in which there is represented a block schematic diagram of the beginning of the cycle of electrostatic painting with powder paint, the reference numeral 20 indicates a station, of conventional type, where moulded reflectors 10 are loaded onto a transport conveyor to be conveyed through subsequent stations the first of which is an electrostatic powder painting station provided in a conventional manner with a powder distribution unit 20 and a powder recovery unit 23; downstream from the painting station 21 there is a polymerisation oven 24, downstream from which there is finally a discharge station 25 for the painted reflectors 10. By way of example there are provided various details relating to the performance of the paint cycle for the reflector 10 of Figures 1 and 2 for which the technological mould paramets have already been indicated:

| | |
|---|---|
| conveyor speed | 7.8 m/min |
| supply pressure | 2.5 bar |
| voltage | 80-90 KV |
| gun-workpiece distance | 70 mm |
| paint thickness (after polymerisation) | 110-130 μm |
| baking | 20 minutes at 240°C |

In Figure 4 there is on the other hand shown a block diagram of the beginning of the cycle for performing electrostatic painting with liquid paints, which is different from the diagram of Figure 3 by the different type of electrostatic painting station (now a liquid painting station indicated with the numeral 21′)

3

provided in a conventional manner with a liquid paint delivery unit 22', and by the fact that downstream from the painting station 21' before the polymerisation furnace 24, there is a drying furnace 27. By way of example, there are provided various details relating to the performance of the liquid painting cycle, again for the said reflector 10 of Figures 1 and 2:

| conveyor speed | 4 m/min |
|---|---|
| supply pressure | 1.5 bar |
| voltage | 60-70 KV |
| gun to workpiece distance | 70 mm |
| paint thickness (after polymerisation) | 30-40 $\mu$m |
| paint viscosity | 22"CF4 at 20°C |
| drying | 5 minutes |
| baking | 30 minutes at 140°C |

The paints utilised must have a high stretching (which translates into a high degree of lack of surface irregularities in the painted surface) and reflectance (which translates into a high coefficient of reflection of a painted surface), beyond the usual characteristics required of a paint, among which are included an excellent adherence to the support; the headlamp reflectors thus painted therefore have the necessary reflectance to be able to effect subsequent aluminising under vacuum which otherwise would result in them being lustreless.

The advantages obtained with the process of the present invention as described are evident in that a headlamp reflector can be obtained by means of injection moulding of a synthetic conductive polymer based on polyphenylene suphide and subsequent electrostatic painting exploiting the electrical conductivity characteristics of this thermoplastic material so that it can be perfectly painted, combined with the fundamental characteristics of ease of moulding, with high resistance to external agents (such as hydrocarbons) and to heat, for which this reflector can be produced at relatively low cost and with significant advantages with respect to the utilisation of both thermoplastic and thermosetting materials.

Finally, it is clear that various modifications and variations can be introduced into what has been specified without departing from the ambit of the inventive idea contained therein. For example the configuration of this reflector can be formed differently on the basis of a preselected mathematical formula for representation of the reflecting surface.

## Claims

1. A method for the manufacture of a headlamp reflector made from a synthetic thermoplastic polymer, characterised by the fact that it comprises a first phase for producing the structure (10) of the said reflector by moulding a synthetic thermoplastic polymer incorporating a percentage of conductive material such as to confer on it a volume resistivity less than $10^8$ ohm.cm., and a second phase of electrostatically painting the said moulded reflector (10).

2. A method according to Claim 1, characterised by the fact that the said synthetic thermoplastic polymer is based on polyphenylene sulphide.

3. A method according to Claim 1 or Claim 2, characterised by the fact that the said conductive material is present in a percentage by weight of between 1% and 25%

4. A method according to Claim 3, characterised by the fact that the said conductive material has a percentage by weight of about 5% such as to confer to the said synthetic polymer a volume resistivity about $10^4$ ohm.cm..

5. A method according to any preceding Claim, characterised by the fact that the said conductive material is of carbonaceous type.

6. A method according to any of Claims from 1 to 4, characterised by the fact that the said conductive material comprises metal fibres.

7. A method according to any preceding Claim, characterised by the fact that the said synthetic polymer includes glass fibres and/or mineral fillers.

8. A method according to any preceding Claim, characterised by the fact that the said moulding of the said first phase is an injection moulding.

9. A method according to any preceding Claim, characterised by the fact that the said painting in the said second phase is performed in a liquid or powder paint application chamber (21; 21').

4

10. A method according to any preceding Claim, characterised by the fact that the said second phase is followed by a third phase of polymerisation of the said paint.

11. A headlamp reflector, characterised by the fact that it is produced with a method according to any preceding Claim.

12. A reflector according to Claim 11, characterised by the fact that it is a land, air or marine vehicle reflector.

Fig.1

Fig.2

(Dr. Ing. Paolo JORIO)

Fig.3

Fig.4

(Dr. Ing. Paolo JORIO)